# EUROPEAN PATENT APPLICATION

(11) **EP 2 546 293 A1**
(43) Date of publication of application: **16.01.2013**
(21) Application number: 11753362.0
(22) Date of filing: 08.03.2011
(51) Int. Cl.: C08J 9/14, C08G 73/10

(54) **MELT-SHAPED BODY OF POLYIMIDE PRECURSOR AND PROCESS FOR PRODUCTION OF POLYIMIDE FOAM USING SAME**

(30) Priority: 08.03.2010 JP 2010050559
(71) Applicant: Ube Industries, Ltd., Ube-shi Yamaguchi 755-8633 (JP)
(72) Inventor: HOSOMA, Toshinori, Ube-shi Yamaguchi 755-8633 (JP); OZAWA, Hideki, Ichihara-shi Chiba 290-0045 (JP); YAMAMOTO, Shigeru, Ichihara-shi Chiba 290-0045 (JP); KANEKO, Yukio, Ube-shi Yamaguchi 755-8633 (JP)
(74) Representative: Grünecker, Kinkeldey, Stockmair & Schwanhäusser
(86) International application number: PCT/JP2011/055378
(87) International publication number: WO 2011/111704

(57) **Abstract**

The object is to propose an improved process for the production of a polyimide foam by which a large-sized polyimide foam in a state of fine and homogeneous cells can be readily obtained by easy operations and convenient steps. A melt-shaped body of a polyimide precursor obtainable by melt-treating in a closed state a powder of a polyimide precursor including at least an aromatic tetracarboxylic acid ester component and an aromatic amine component. A process for the production of a polyimide foam including the steps of melt-shaping in a closed state a powder of a polyimide precursor including at least aromatic tetracarboxylic acid ester component and an aromatic amine component to give a melt-shaped body of the polyimide precursor, and foaming the melt-shaped body of the polyimide precursor by a heat treatment.

## Description

### Technical Field

The present invention relates to a melt-shaped body of a polyimide precursor and to a process for the production of a polyimide foam using the melt-shaped body, and specifically relates to a melt-shaped body of a polyimide precursor which is obtainable by melt-treating in a closed state a powder of a polyimide precursor and to a process for the production of a polyimide foam using the melt-shaped body.

### Background Art

Various considerations have been made for polyimide foams since excellent properties such as heat-resistance can be expected as compared to other polymer foams.
Patent Literature 1 describes a production process for producing a polyimide foam by using a powder of a polyimide precursor including an aromatic tetracarboxylic acid ester and an amine component. This literature describes a process for the production of a polyimide foam by which a foaming magnification can be controlled preferably by heat treating a slurry obtained by adding a predetermined amount of a polar protonic foam promoter to a powder of a polyimide precursor to give a homogeneous and transparent solution or an opaque suspension liquid, making the solution or suspension liquid into a molten product, and subsequently foaming the molten product.
Patent Literature 2 describes a production process for producing a polyimide foam by using a powder of a polyimide precursor (a prepolymer for a polyimide foam) including a condensate of an aromatic tetracarboxylic acid ester, an aniline and formaldehyde. In this production process, a polyimide foam is obtained by putting the polyimide precursor into a microwave oven kept at 140°C, melting the polyimide precursor at the same temperature, and subsequently irradiating the polyimide precursor with a microwave to conduct a condensation reaction.
Patent Literature 3 describes a production process including forming a powder of a polyimide precursor including specific aromatic tetracarboxylic acid ester component and aromatic amine component into an approximately homogeneous green formed body, and heat-treating the green formed body to give a polyimide foam.

### Citation List

### Patent Literatures

Patent Literature 1: Japanese Patent Application Laid-Open (JP-A) No. 4-211440
Patent Literature 2: JP-A No. 6-298936
Patent Literature 3: JP-A No. 2002-12688

### Summary of Invention

### Technical Problem

However, even in such processes for the production of a polyimide foam, it was not easy to readily obtain a large-sized polyimide foam having a size of, for example, about 1 m × 1 m × 0.5 m or more in a state of fine and homogeneous cells by easy operations and convenient steps as compared to the cases of other polymer foams, and thus there was room for further improvement. Therefore, the present invention aims at providing an improved process for the production of a polyimide foam by which a large-sized polyimide foam in a state of fine and homogeneous cells can be readily obtained by easy operations and convenient steps, and a melt-shaped body of a polyimide precursor used therefor.

### Solution to Problem

In order to attain the above-mentioned object, the present inventors have done intensive studies and found that, with respect to a process for the production of a polyimide foam, a large-sized polyimide foam in a state of fine and homogeneous cells can be readily obtained by foaming a melt-shaped body of a polyimide precursor obtainable by melt-treating in a closed state a powder of the polyimide precursor.

Thus the present invention provides a melt-shaped body of a polyimide precursor obtainable by melt-treating in a closed state a powder of a polyimide precursor including at least an aromatic tetracarboxylic acid ester component and an aromatic amine component.

Further, the present invention provides a process for the production of a polyimide foam, including the steps of: melt-shaping in a closed state a powder of a polyimide precursor including at least aromatic tetracarboxylic acid ester component and an aromatic amine component to give a melt-shaped body of the polyimide precursor, and foaming the melt-shaped body of the polyimide precursor by a heat treatment.

### Advantageous Effects of Invention

According to the present invention, an improved process for the production of a polyimide foam by which a large-sized polyimide foam can be readily obtained in a state of fine and homogeneous cells by easy operations and convenient steps, and a melt-shaped body of a polyimide precursor used therefor can be provided.

### Description of Embodiments

In the process for the production of a polyimide foam according to the present invention, the aromatic tetracarboxylic acid ester component that constitutes the polyimide precursor is an ester compound including an aromatic tetracarboxylic acid and a lower alcohol. The aromatic tetracarboxylic acid ester component can be readily obtained by adding an aromatic tetracarboxylic acid dianhydride, and an esterification catalyst as necessary to a lower alcohol, and reacting at a temperature of 200°C or less, preferably 120°C or less, for 0.1 to 48 hours, preferably about 1 to 24 hours. According to this process, a solution of an aromatic tetracarboxylic acid ester component including a diester form of an aromatic tetracarboxylic acid as a main component can be preferably obtained.

The aromatic tetracarboxylic acid is not specifically limited and may be any one as long as it is an aromatic tetracarboxylic acid that can form a polyimide foam, and preferable examples may include biphenyltetracarboxylic acids such as 2,3,3',4'-biphenyltetracarboxylic acid, 2,2',3,3'-biphenyltetracarboxylic acid and 3,3',4,4'-biphenyltetracarboxylic acid, 3,3',4,4'-benzophenonetetracarboxylic acid, 4,4'-oxydiphthalic acid, pyromellitic acid, 3,3',4,4'-diphenylsulfonetetracarboxylic acid, 2,2-bis(3,4-dicarboxyphenyl)methane and the like.

The lower alcohol used in the esterification is preferably an alkyl alcohol having 1 to 6 carbon atoms such as methanol, ethanol, propanol, butanol and pentanol.

In the process for the production of a polyimide foam according to the present invention, the aromatic amine component that constitutes the polyimide precursor may be, for example, a multiamine component including a condensate of an aniline and formaldehyde, or the like, it is preferably an aromatic diamine component including an aromatic diamine or a diisocyanate in which the amino groups thereof have been modified to isocyanate groups or the like, and the like. The aromatic diamine component is not specifically limited and may be any one as long as it is an aromatic diamine component that can form a polyimide foam, and preferable examples may include diaminobenzenes such as 1,4-diaminobenzene, 1,3-diaminobenzene and 1,2-diaminobenzene, diaminotoluenes such as 2,4-diaminotoluene and 2,6-diaminotoluene, 2,6-diethyl-1,3-diaminobenzene, 4,6-diethyl-2-methyl-1,3-diaminobenzene, 3,5-diethyltoluene-2,6-diamine, 4,4'-diaminodiphenyl ether, 3,4'-diaminodiphenyl ether, 3,3'-diaminodiphenyl ether, 3,3'-diaminobenzophenone, 4,4'-diaminobenzophenone, 3,3'-diaminodiphenylmethane, 4,4'-diaminodiphenylmethane, 4,4'-diaminodiphenylsulfone, bis(2,6-diethyl-4-aminophenyl)methane, 4,4'-methylene-bis(2,6-diethylaniline), bis(2-ethyl-6-methyl-4-aminophenyl)methane, 4,4'-methylene-bis(2-ethyl-6-methylaniline), 2,2-bis(3-aminophenyl)propane, 2,2-bis(4-aminophenyl)propane, 1,3-bis(4-aminophenoxy)benzene, 1,3-bis(3-aminophenoxy)benzene, 1,4-bis(4-aminophenoxy)benzene, 1,4-bis(3-aminophenoxy)benzene, benzidine, 3,3'-dimethylbenzidine, 2,2-bis(4-aminophenoxy)propane, 2,2-bis(3-aminophenoxy)propane, 2,2-bis[4'-(4''-aminophenoxy)phenyl]hexafluoropropane, 9,9-bis(4-aminophenyl)fluorene, bis[4-(4-aminophenoxy)phenyl]sulfone, 4,4'-bis(4-aminophenoxy)biphenyl and the like, or diisocyanate compounds in which the amino groups thereof have been modified to isocyanate groups or the like.

In the process for the production of a polyimide foam according to the present invention, it is specifically preferable that the aromatic tetracarboxylic acid ester component is any of biphenyltetracarboxylic acid esters such as 2,3,3',4'-biphenyltetracarboxylic acid ester, 2,2',3,3'-biphenyltetracarboxylic acid ester and 3,3',4,4'-biphenyltetracarboxylic acid ester, 3,3',4,4'-benzophenonetetracarboxylic acid esters, 4,4'-oxydiphthalic acid esters and pyromellitic acid esters, and the aromatic diamine component is preferably any one of 1,4-diaminobenzene, 1,3-diaminobenzene, 4,4'-diaminodiphenylmethane and diaminotoluene.

Furthermore, it is preferable that the aromatic tetracarboxylic acid ester component includes 0 to 90 mol% of a 3,3',4,4'-biphenyltetracarboxylic acid ester, 100 to 10 mol% of a 3,3',4,4'-benzophenonetetracarboxylic acid ester and/or a 2,3,3',4'-biphenyltetracarboxylic acid ester, and the aromatic diamine component includes 50 to 97 mol% of 1,3-diaminobenzene and 50 to 3 mol% of 4,4'-diaminodiphenylmethane, since a polyimide foam can be produced easily even in the case when a large-sized polyimide foam is to be obtained, and the obtained foamed polyimide has homogeneous and fine cells, and has practical mechanical properties as a foam such as flexibility by which cracks are not generated easily even when the foam is deformed, and excellent cushioning property, and heat-resistance by which the foam can tolerate uses at a high temperature.

In the process for the production of a polyimide foam according to the present invention, besides the aromatic tetracarboxylic acid ester component and aromatic amine component, additives such as a surfactant (foam stabilizer), a catalyst and a flame retarder can be preferably added as necessary to the polyimide precursor as used.

As the surfactant (foam stabilizer), surfactants that are preferably used as foam stabilizers for polyurethane foams can be preferably used. Among these, polyether-modified silicone oils such as graft copolymers in which a part of the methyl groups in a polydimethylsiloxane are substituted with polyalkylene oxide groups such as polyethylene oxide groups, poly(ethylene-propylene) oxide groups or propylene oxide groups (the terminals of the substituted polyalkylene oxide groups are hydroxyl groups, alkyl ether groups such as methyl ether or alkyl ester groups such as acetyl groups) are specifically preferable.

Specific examples of the polyether-modified silicone oils may include commercial products such as SH-193, SH-192, SH-194, SH-190, SF-2937, SF-2908, SF-2904, SF-2964, SRX-298, SRX-2908, SRX-274C, SRX-295, SRX-294A and SRX-280A (these are manufactured by Dow Corning Toray Silicone), L-5340, SZ-1666 and SZ-1668 (these are manufactured by Nippon Unicar Company, Ltd.), TFA4205 (manufactured by GE Toshiba Silicones), X-20-5148, X-20-8046, X-20-8047, X-20-8048, X-20-8049, F-518, F-348, F-395, F-506, F-317M, KF-351A, KF-353A, KF-354L and KP-101 (these are manufactured by Shin-Etsu Chemical Co. , Ltd.), and L6100J, L6100, L6884, L6887, L6900, L6970 and L5420 (these are manufactured by Momentive Performance Materials Inc.).

The catalyst is used for promoting polymerization-imidization, and imidazoles such as 1,2-dimethylimidazole, 2-ethyl-4-methylimidazole and benzimidazole, quinolines such as isoquinoline, pyridines such as pyridine, amines such as 1,8-diaza-bicyclo(5,4,0)undecene-7 and the like are preferable.

Furthermore, although the polyimide foam has high flame retardancy, in order to impart further flame retardancy thereto, flame retarders such as phosphorus compounds such as trivalent phosphite esters can preferably be used.

In the process for the production of a polyimide foam according to the present invention, the powder of the polyimide precursor can be preferably conducted by a process including evaporating a solvent from a solution in which the polyimide precursor is so-called molecular-dispersed homogeneously to dryness, and pulverizing the obtained dried product (solid) or simultaneously conducting the evaporation and powderization of the solvent by using a spray drier or the like. In the evaporation of the solvent, it is preferable to conduct a heat treatment within a low temperature range at which foaming is not generated, preferably at 100°C or less, more preferably at 70°C or less. Here, it is sufficient that the polyimide precursor is powdered, and it is preferable that about 0.1 to 15 mass% of the solvent remains. Generally, even in the case when, for example, methanol that is a solvent having a low boiling point is used, 0.1 to 10 mass% of, more preferably 0.5 to 5 mass% of (free) methanol remains. A powder of the polyimide precursor obtained by evaporating at a higher temperature than the above-mentioned temperature has significantly decreased foaming property. The evaporation of the solvent and the drying of the powder may be conducted under an ordinary pressure, under a pressure, or under a reduced pressure.

The above-mentioned solution of the polyimide precursor can be preferably obtained by adding to a solvent the respective components of the polyimide precursor including at least the aromatic tetracarboxylic acid ester component and aromatic amine component, and additives such as a surfactant (a foam stabilizer), a catalyst and a flame retarder as necessary, and dissolving homogeneously by mixing and stirring at preferably 60°C or less (generally at a room temperature such as 24°C) for preferably about 0.1 to 6 hours (generally 1 to 2 hours).
Specifically, it can be preferably obtained by adding at first the aromatic tetracarboxylic acid dianhydride, and an esterification catalyst as necessary to the lower alcohol and reacting to prepare a lower alcohol solution of the aromatic tetracarboxylic acid ester component, adding other components such as the aromatic amine component to the reaction solution, and dissolving homogeneously and mixing.
It is preferable to use the aromatic tetracarboxylic acid ester component and aromatic amine component in approximately equivalent amount numbers, specifically, at a ratio of the equivalent amount numbers (aromatic tetracarboxylic acid component/aromatic diamine component) of in the range of 0.95 to 1.05, or in the case of the aromatic tetracarboxylic acid ester component and aromatic diamine component, it is preferable to use them in approximately equivalent moles, specifically at a molar ratio (aromatic tetracarboxylic acid component/aromatic diamine component) in the range of 0.95 to 1.05.

The solvent used for the preparation of the polyimide precursor is not specifically limited as long as it can dissolve the aromatic tetracarboxylic acid ester component and aromatic amine component. Alcohols, ethers, ketones or other organic solvents can be preferably used, and in the case when the polyimide precursor is obtained by powderization, a solvent having a low boiling point is preferably adopted.
Meanwhile, in the case when the aromatic diamine is added to the solution of the aromatic tetracarboxylic acid ester component to form a homogeneous solution, it is preferable to add the additives such as the surfactant, catalyst and flame retarder which are added as necessary to the polyimide precursor prior to adding the aromatic diamine, but may be added after adding the aromatic diamine.

In the process for the production of a polyimide foam according to the present invention, the powder of the polyimide precursor is melt-treated in a closed state as it is, or after being formed into a pre-formed article as necessary, and thereafter subjected to a cooling treatment, thereby formed into the melt-shaped body of the polyimide precursor according to the present invention. The pre-formed article can be preferably obtained by, for example, filling the powder of the polyimide precursor in a mold at a room temperature, and compressing and molding.

The melt-shaped body of the polyimide precursor of the present invention can be preferably obtained by melt-treating in a closed state the powder of the polyimide precursor at a temperature of preferably lower than 140°C, more preferably 120°C or less, further preferably 100°C or less for preferably 1 to 120 minutes, more preferably about 10 to 60 minutes, preferably while controlling the shape so that the melt-shaped body becomes a predetermined shape. Furthermore, where necessary, the melt-treatment may be conducted under a suitable pressure. The reason why the closed state is used is that the solvent remaining in the powder of the polyimide precursor and the vaporized component such as a lower alcohol that is generated by the elimination reaction of the ester are kept remaining to readily obtain the melt-shaped body at such a low temperature that an imidization reaction is suppressed. Therefore, it is sufficient that the closed state can suppress the scatter of the volatile components by vaporization and evaporation, and this can be readily attained by, for example, covering the powder of the polyimide precursor with a polymer film having low gas permeability or the like. If the melt-treatment is conducted without making the closed state, the powder of the polyimide precursor is dried, and thus the melt-shaped body cannot be obtained readily. The temperature for the melt-treatment should be a temperature equal to or more than the temperature at which the powder of the polyimide precursor is molten, but when the temperature exceeds 140°C, the elimination reaction of the ester becomes heavy and the imidization reaction occurs in this step, and thus it becomes difficult to conduct sufficient foaming when foaming is intended by the subsequent heat treatment.

The melt-shaped body of the polyimide precursor of the present invention is preferably formed into a shape that corresponds to the shape of a foam that is expected in the next foaming step. For example, in the case when the melt-shaped body is foamed into a shape having a rectangular bottom, it is preferably formed into a rectangular plate-like shape. Therefore, the powder of the polyimide precursor is formed into a predetermined shape in the state that a predetermined amount of the powder is covered with a polymer film or the like, preferably in the state that the powder is controlled by a controlling plate, a mold or the like so as to retain the shape thereof, pressurized as necessary so as to retain the shape, and heat-treated by an oven, a heat press or the like. By such process, the melt-shaped body of the polyimide precursor is produced, preferably in a continuous manner. The melt-shaped body of the polyimide precursor may be foamed continuously after the closed state is released, but it is not efficient to conduct melting and foaming for which conditions are completely different in the same apparatus. In the process for the production of a polyimide foam according to the present invention, it is not necessary to continuously foam the melt-shaped body of the polyimide precursor, and separate foaming can be preferably conducted after the melt-shaped body has been subjected to a cooling treatment once and stored. The cooling treatment includes not only positive cooling in a low temperature equipment such as a refrigerator but also cooling by leaving the molten product at a room temperature.

According to the process for the production of a polyimide foam according to the present invention, a preferable polyimide foam can be obtained by using the melt-shaped body of the polyimide precursor obtained by melt-treating in a closed state the powder of the polyimide precursor, and foaming the above-mentioned melt-shaped body of the polyimide precursor by a heat treatment. This foaming step can preferably be conducted by adopting similar operations and conditions to those for conventionally-known foaming steps in which foaming is conducted by using a powder of a polyimide precursor.

Although the heat treatment for obtaining the polyimide foam by foaming the melt-shaped body of the polyimide precursor is not limited as long as heating for foaming can be conducted, it can be preferably conducted by using a heating apparatus, for example, an oven or a microwave apparatus, or the like. The heat treatment conditions (heating temperature, time and the like) at this time can be suitably selected depending on the kind of the polyimide precursor and the treatment amount.

In the case when heating is conducted in an oven, it is necessary to conduct a heat treatment at a temperature range of preferably 80 to 200°C, more preferably 100 to 180°C, specifically preferably 130 to 150°C for foaming, and the heat treatment time is preferably 5 to 60 minutes, more preferably about 10 to 30 minutes. A temperature lower than the above-mentioned heating temperature is not preferable since a long time is required for foaming. Furthermore, a temperature higher than the above-mentioned heating temperature is not preferable since it becomes difficult to make the foam cells of the obtained polyimide foam homogeneous.

In the case when a microwave heating apparatus is used in Japan, it is generally conducted at a frequency of 2.45 GHz based on the Radio Law. If the treatment amount of the polyimide precursor is increased, a larger output is required. For example, an output of 1 to 25 kw is preferably adopted to several ten grams to several thousand grams of the powder of the polyimide precursor. When a microwave is irradiated, foaming is initiated generally within about 1 to 2 minutes, and the foaming is concluded within an irradiation time of 5 to 20 minutes.

In either case of the heating in an oven or irradiation of a microwave, the obtained polyimide foam does not have a sufficient mechanical strength at the stage when the forming has been completed. Therefore, it is preferable to further conduct post-heating of the obtained polyimide foam by a heating apparatus such as an oven.

The post-heating can be preferably conducted depending on the size of the obtained polyimide foam at a temperature ranging from 200°C to [the glass transition temperature+10°C] of the polyimide foam, generally at a temperature ranging from 200 to 500°C, preferably 200 to 400°C for 5 minutes to 24 hours, preferably for 1 to 15 hours. The post-heating may be a process in which the heating temperature is changed according to such a predetermined temperature profile that the temperature is gradually raised from a relatively low temperature such as about 200°C at a temperature raising velocity of 10°C/min and heating is finally conducted at a high temperature of about 350°C.

Furthermore, although the heat treatment for obtaining the polyimide foam by foaming the polyimide precursor is not specifically limited, the heat treatment may be conducted in a formwork. When foaming molding is conducted in a formwork, it is possible to obtain a foamed body having a shape close to the shape of the inside of the formwork, which leads to the improvement of the yield during the production of the polyimide foam.

The foaming magnification and apparent density (density) can be suitably controlled depending on various conditions such as the amounts of the volatilized components during the foaming (the alcohol and water that are generated during the polymerization imidization, and the solvent, other volatile additives and the like), the process of the heat treatment, and the temperature profile during the heating.

According to the process for the production of a polyimide foam according to the present invention, a large-sized polyimide foam can be readily obtained in a state of fine and homogeneous cells with fine reproducibility (with a fine yield ratio) by easy operations and convenient steps.

### Examples

Next, the present invention will further be explained in detail by Examples. However, the present invention is not construed to be limited by the following Examples.

In the following examples, the respective symbols mean the following compounds.
s-BPDA: 3,3',4,4'-biphenyltetracarboxylic acid dianhydride
BTDA: 3,3',4,4'-benzophenonetetracarboxylic acid dianhydride
a-BPDA: 2,3,3',4'-biphenyltetracarboxylic acid dianhydride
MPD: metaphenylenediamine
MDA: 4,4'-methylenedianiline
1,2-DMz: 1,2-dimethylimidazole
MeOH: methanol

### [Reference Example 1]

477.1 kg of methanol, 3.358 kg (34.9 mol) of 1,2-DMz, 141.226 kg (480 mol) of s-BPDA, 23.538 kg (80 mol) of a-BPDA and 77.335 kg (240 mol) of BTDA were charged in a reaction bath of 1 m³, the inlet is closed, and the pressure was reduced to -0.06 MPa by a vacuum pump and returned to an ordinary pressure with nitrogen gas. Nitrogen substitution was conducted three times, thereafter the inner temperature was controlled to 65 to 70°C, and stirring under heating was conducted for 2 hours while the methanol was refluxed to give a homogeneous solution. The obtained solution was cooled to 15°C or less, and 77.861 kg (720 mol) of MPD and 15.861 kg (80 mol) of MDA as aromatic diamine components were added thereto so that the inner temperature did not exceed 20°C and reacted for 1 hour. Next, 7.808 kg of L6100J (manufactured by Momentive Performance Materials Inc.) as a silicone surfactant was added thereto, and stirring was conducted to give a homogeneous solution without generation of a precipitated product. This solution was powderized by using a mist drier (MDP-050). Namely, the powderization was conducted by spray-drying the above-mentioned solution at a temperature of 50°C and a liquid sending amount of 640 cc/min while feeding dry air at a flow amount of 30 m³/min (while removing moisture by using a dehumidifier in combination) to give a powder of the polyimide precursor.

### [Example 1]

7,900 g of the powder of the polyimide precursor obtained in Reference Example 1 was put into a bag-like article made of polyethylene (poly bag) having a size of 1280 × 1800 mm and a thickness of 0.45 mm, the thickness of the powder of the polyimide precursor was made even while pushing the air out of the bag as much as possible, and the opening of the bag-like article was closed by a tape.
A metal plate having a size of 1230 × 1230 mm was put in an oven and the remaining jigs were also put in the oven in advance, and pre-heated at 100°C for 1 hour. The powder of the polyimide precursor enclosed in the bag-like article was put on the metal plate, a similar metal plate was further put on the surface thereof, thereby the bottom surface and upper surface of the powder of the polyimide precursor enclosed in the bag-like article was completely interposed and laminated between the metal plates. Furthermore, 30 pieces of weights were laid thereon so that their weights were dispersed evenly, so that the obtained melt-shaped body of the polyimide precursor became dense and had a even thickness. At that time, the average pressure was about 10 g/cm². A melt-treatment was conducted in this state for 20 minutes, thereafter the laminate was allowed to cool to a room temperature, and a plate-like melt-shaped body of the polyimide precursor having a size of about 990 × 990 × 7.3 mm was taken out.
Next, the melt-shaped body of the polyimide precursor was taken out by peeling off the bag-like article and put on the center of a metal frame of 1280 × 1280 × 770 mm that had been pre-heated to 100°C in advance. The metal frame was put into a microwave oven, pre-heating was conducted for 20 minutes, thereafter foaming was conducted by microirradiation at 17.5 kW for 10 minutes. After the foaming, the metal frame was taken out from the microwave oven and put into a calcination furnace immediately, temperature raising was initiated after the temperature has reached 200°C, the temperature was raised gradually up to 330°C, the heating was stopped at 6 hours after the initiation of temperature raising and temperature decreasing was initiated, and the metal frame was taken out from the oven at the time when the temperature had become 250°C or less and allowed to be cooled by still standing at a room temperature for 2 hours or more. Sufficient decrease of the temperature was confirmed, and a polyimide foam was taken out from the metal frame.
The obtained polyimide foam had a foaming magnification of 184-fold, and when the cross-sectional surface was examined by visual inspection, the cross-sectional surface had fine and homogeneous cells, and "lines", "roughness", "pin holes" and "cracking" were not observed.
A polyimide foam was obtained by repeating similar operations 5 times. The obtained polyimide foam had a foaming magnification of about 160 to 200-fold, and when the cross-sectional surface was examined by visual inspection, the cross-sectional surface had fine and homogeneous cells, and "lines", "roughness", "pin holes" and "cracking" were not observed.

### [Comparative Example 1]

Melting was tried at 100°C without putting the powder of the polyimide precursor into a closed state, but the powder remained as a powder and was not molten, and thus a melt-shaped body of the polyimide precursor could not be obtained.

### Industrial Applicability

According to the present invention, an improved process for the production of a polyimide foam by which a large-sized polyimide foam in a state of fine and homogeneous cells can be readily obtained by easy operations and convenient steps can be obtained.

## Claims

1. A melt-shaped body of a polyimide precursor obtainable by melt-treating in a closed state a powder of a polyimide precursor comprising at least an aromatic tetracarboxylic acid ester component and an aromatic amine component.

2. A process for the production of a polyimide foam, comprising the steps of:
melt-shaping in a closed state a powder of a polyimide precursor comprising at least aromatic tetracarboxylic acid ester component and an aromatic amine component to give a melt-shaped body of the polyimide precursor, and
foaming the melt-shaped body of the polyimide precursor by a heat treatment.

3. The process for the production of a polyimide foam according to claim 2, wherein the melt-treatment temperature in the melt-shaping step is lower than 140°C.

4. The process for the production of a polyimide foam according to claim 2 or 3, wherein the aromatic amine component is an aromatic diamine component.

5. The process for the production of a polyimide foam according to any of claims 2 to 4, wherein the aromatic tetracarboxylic acid ester component is an esterified product of a tetracarboxylic acid selected from the group including 2,3,3',4'-biphenyltetracarboxylic acid, 2,2',3,3'-biphenyltetracarboxylic acid, 3,3',4,4'-biphenyltetracarboxylic acid, 3,3',4,4'-benzophenonetetracarboxylic acid, 4,4'-oxydiphthalic acid and pyromellitic acid.

6. The process for the production of a polyimide foam according to claim 4 or 5, wherein the aromatic diamine component is an aromatic diamine selected from the group including 1,4-diaminobenzene, 1,3-diaminobenzene, 4,4'-diaminodiphenylmethane and diaminotoluene.
